# EUROPÄISCHE PATENTSCHRIFT

(11) **EP 0 806 386 B1**
(45) Veröffentlichungstag und Bekanntmachung des Hinweises auf die Patenterteilung: **21.11.2001**
(21) Anmeldenummer: 97107160.0
(22) Anmeldetag: 30.04.1997
(51) Int. Cl.: B65G 47/91

(54) **Vorrichtung zum Handhaben von Zuschnittstapeln**
Device for handling stacks of blanks
Dispositif pour manipuler des piles de découpes

(30) Priorität: 08.05.1996 DE 19618344
(43) Veröffentlichungstag der Anmeldung: 12.11.1997
(73) Patentinhaber: Focke & Co. (GmbH & Co.), 27283 Verden (DE)
(72) Erfinder: Focke, Heinz, 27283 Verden (DE); Freudenberg, Harald, 31608 Marklohe (DE)
(74) Vertreter: Bolte, Erich, Dipl.-Ing.

(56) Entgegenhaltungen:
- EP-A- 0 581 188
- EP-A- 0 629 573
- FR-A- 2 617 078

## Beschreibung

Die Erfindung betrifft eine Vorrichtung zum Aufnehmen und Abtransportieren von Stapeln aus übereinander angeordneten Zuschnitten - Zuschnittstapeln -, insbesondere für die Fertigung von Klappschachteln (Hinge-Lid-Packungen) für Zigaretten, wobei mehrere Zuschnittstapel in Reihen nebeneinander auf einer Unterlage positioniert und vorzugsweise aus mehreren Reihen gebildete Lagen übereinander angeordnet sind, vorzugsweise auf einer Palette, und wobei weiterhin zur Aufnahme von vorzugsweise einzelnen Zuschnittstapeln ein an einem schwenkbaren Arm angeordneter Aufnahmekopf den Zuschnittstapel erfasst und auf einem Abförderer absetzt.

Die Zigarettenindustrie mit den leistungsfähigen Verpackungsmaschinen ist auf zuverlässige und ebenfalls leistungsfähige Einrichtungen und Aggregate zur Handhabung des Verpackungsmaterials angewiesen. Die weit verbreiteten Klappschachteln (Hinge-Lid-Packungen) werden aus anderweitig gefertigten Zuschnitten hergestellt, die als Zuschnittstapel, meist auf Paletten, angeliefert werden. Die Erfindung befasst sich mit dem Entleeren der Paletten, also mit der Aufnahme der Zuschnittstapel von der Palette und der Übergabe an die Verpackungsmaschine bzw. an einen Speicher oder Förderer für die Zuschnittstapel.

Bekannt ist eine Vorrichtung zum Aufheben und Abtransportieren von Zuschnittstapeln (EP 0 581 188 A1), bei der die Zuschnittstapel von einer Banderole umgeben sind. Der Oberbegriff des Anspruchs 1 entspricht diesem Stand der Technik. Die Vorrichtung weist einen Hubkopf mit einem Haltebacken und einer zungenartigen unteren Platte auf, der auf- und abbewegbar ist und jeweils einen Zuschnittstapel mit Hilfe von Saugorganen an der Oberseite im Bereich der Banderole erfasst. Der Zuschnittstapel wird demnach mittelbar über die Banderole angehoben und transportiert. Für die Handhabung von Zuschnittstapeln ohne Banderole ist diese Vorrichtung nicht geeignet.

Der Erfindung liegt die Aufgabe zugrunde, eine Handhabungsvorrichtung für Zuschnittstapel vorzuschlagen, die mit hoher Leistung die Zuschnittstapel zuverlässig von der Palette bzw. einer Unterlage aufnimmt, anhebt und an geeigneter Stelle absetzt.

Zur Lösung dieser Aufgabe ist die erfindungsgemäße Vorrichtung dadurch gekennzeichnet, daß der Aufnahmekopf des Handhabungsgerätes zwei Haltebacken aufweist, die an freien, aneinandergrenzenden Seitenflächen des Zuschnittstapels Anlage erhalten und diesen ausschließlich durch Saugwirkung erfassen und zusammen halten.

Während bei bisherigen Vorrichtungen für die Handhabung von Zuschnittstapeln stets ein zungenartiges, dünnwandiges Halte- bzw. Klemmorgan unter den Zuschnittstapel gefahren wird, beruht die Arbeitsweise des erfindungsgemäßen Aufnahmekopfes darauf, daß der (einzelne) Zuschnittstapel ausschließlich an aufrechten Seitenflächen erfaßt und gehalten wird, und zwar durch Saugluft, also Unterdruck.

Der Aufnahmekopf ist zu diesem Zweck mit zwei unter einem rechten Winkel zueinander angeordneten, aufrechten Haltebacken ausgerüstet, die in einer Aufnahmestellung des Aufnahmekopfes durch entsprechende Bewegung vorzugsweise individuell und nacheinander gegen zugeordnete aufrechte Seitenflächen des Zuschnittstapels gefahren werden. Bei Anlage dieser Haltebacken am Zuschnittstapel wird über Saugbohrungen im Bereich von Anlageflächen der Haltebacken Unterdruck erzeugt. Dadurch wird der aus den sehr dicht gestapelten Zuschnitten gebildete Zuschnittstapel an den beiden Haltebacken fixiert. Der Aufnahmekopf kann nun mit dem Zuschnittstapel angehoben und zum Absetzen desselben verfahren werden.

Weitere Merkmale der Erfindung beziehen sich auf die Ausgestaltung des Aufnahmekopfes, insbesondere der Haltebacken, sowie auf Organe zum Steuern der erforderlichen Bewegungen des Aufnahmekopfes. Ein Ausführungsbeispiel der erfindungsgemäßen Vorrichtung wird nachfolgend anhand der Zeichnungen näher erläutert. Es zeigt:
- Fig. 1: eine Vorrichtung zum Handhaben von Zuschnittstapeln im schematischen Grundriß,
- Fig. 2: einen Aufnahmekopf der Vorrichtung in vereinfachter Seitenansicht,
- Fig. 3: Einzelheiten des Aufnahmekopfes gemäß Fig. 2 im Grundriß bzw. Horizontalschnitt in der Ebene III-III der Fig. 2,
- Fig. 4: eine Darstellung analog zu Fig. 3 bei einer veränderten Relativstellung des Aufnahmekopfes,
- Fig. 5: eine gegenüber Fig. 2 um 90° versetzte Seitenansicht des Aufnahmekopfes,

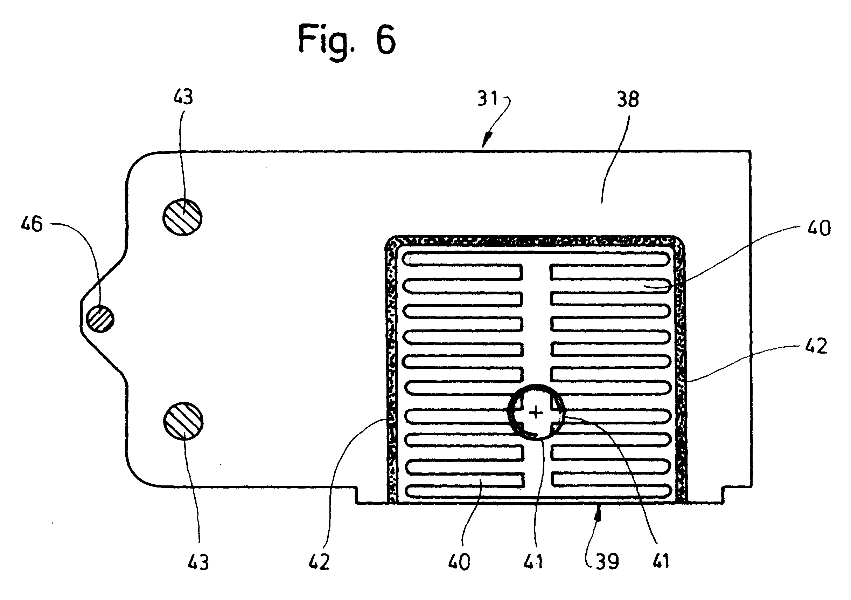

- Fig. 6: eine Einzelheit des Aufnahmekopfes in einer Schnitt- bzw. Sichtebene VI-VI der Fig. 5.

Das vorliegende, bevorzugte Ausführungsbeispiel befaßt sich mit der Handhabung von Zuschnittstapeln 10, die je aus einer Vielzahl von Zuschnitten aus dünnem Karton gebildet sind. Die Zuschnitte eines Zuschnittstapels 10 haben übereinstimmende Grundrißformen, so daß die Zuschnittstapel 10 verhältnismäßig glattflächige, dichte Seitenflächen bilden, nämlich Seitenflächen 11 und 12 sowie Kopfflächen 13 und Endflächen 14.

Die Zuschnittstapel 10 bestehen im vorliegenden Fall aus Zuschnitten für die Fertigung von Klappschachteln (Hinge-Lid-Packungen) für Zigaretten. Dieser weit verbreitete Packungstyp bedingt aufgrund der Konstruktion eine besondere, charakteristische Kontur der Zuschnitte. Die Seitenflächen 11, 12 bildende Längsränder der Zuschnitte sind geradlinig mit schmalen Stanzungen und Ausnehmungen, die der Einfachheit halber in den Zeichnungen nicht erkennbar sind. Charakteristisch ist die Kopffläche 13 der Zuschnittstapel 10, und zwar durch einen vorspringenden Deckel-Innenlappen 15 der Zuschnitte und durch angrenzende Schrägkanten 16. Der Deckel-Innenlappen 15 liegt bei der fertigen Klappschachtel an der Innenseite einer Deckel-Vorderwand an. Die Schrägkanten 16 bilden übliche Schrägkanten der Klappschachtel im Bereich einer Schließkante.

Auch die gegenüberliegende Endfläche 14 ist bei diesem Zuschnittyp charakteristisch gestaltet, nämlich ebenfalls mit Schrägkanten 17 und einer mittigen Querkante 18, durch die die beiden randseitigen Schrägkanten 17 miteinander verbunden sind. Die genannten Kanten 17, 18 begrenzen eine trapezförmige Ausnehmung. Diese definiert auch die Gestalt der Endfläche 14 des Zuschnittstapels, nämlich mit einer trapezförmigen Vertiefung.

Die Zuschnittstapel 10 werden auf einer Unterlage angeliefert, im vorliegenden Falle auf einer Palette 19. Auf dieser sind die Zuschnittstapel 10 in mehreren dicht nebeneinander liegenden Reihen 20 positioniert. Die Zuschnittstapel 10 sind in einer Reihe 20 gleichgerichtet und liegen mit den Seitenflächen 11, 12 aneinander. Benachbarte Reihen stoßen an den Kopfflächen 13 und Endflächen 14 der Zuschnittstapel 10 aneinander. Die Zuschnittstapel 10 sind von Reihe 20 zu Reihe 20 ausgerichtet.

Mehrere Reihen bilden eine Lage 21. Die Palette 19 ist mit mehreren übereinander angeordneten Lagen 21 besetzt. Zwischen den Lagen sind durchgehende, geschlossene Zwischenlagen 22 aus Papier, Folie oder dergleichen angeordnet.

Zur Entladung der Palette 19 wird diese in eine im Grundriß U-förmige Halterung 23 eingesetzt. Diese umgibt die Seitenflächen der Palette 19 in Teilbereichen.

Die Zuschnittstapel 10 werden zur Weiterverarbeitung einzeln, nacheinander von der Palette 19 abgenommen und einem Abförderer 24 übergeben. Es handelt sich dabei um einen Fördergurt, auf dem die Zuschnittstapel 10 mit geringen Abständen voneinander und mit ihrer Längserstreckung quer zur Förderrichtung weisend aufliegen. Der Abförderer 24 transportiert die Zuschnittstapel zur Verpackungsmaschine oder zu einem (Zwischen-)Speicher.

Zum Abräumen der Palette 19 dient ein vorzugsweise ortsfest installierter Depalettierer 25. Dieser ist nach Art eines selbsttätig arbeitenden Roboters ausgebildet. An feststehenden aufrechten Tragsäulen 26 ist ein Tragstück 27 auf- und abbewegbar. An dem Tragstück 27 wiederum ist ein Gelenkarm 28 schwenkbar angebracht. Am Ende des zweiteiligen Schwenkarms befindet sich ein Greifkopf bzw. Aufnahmekopf 29 zum Erfassen jeweils eines Zuschnittstapels 10. Der Aufnahmekopf 29 ist drehbar am Ende des Gelenkarms 28 angeordnet. Durch dessen Bewegbarkeit und durch die Auf- und Abbewegung des Tragstücks 27 kann der Aufnahmekopf 29 an jede Position im Bereich der Palette 19 gefahren werden, um einen Zuschnittstapel 10 aufzunehmen.

Der Aufnahmekopf 29 ist zum Erfassen eines Zuschnittstapels mit mindestens zwei Halteorganen versehen, die an freien, aufrechten Seitenflächen des Zuschnittstapels 10 anliegen und diesen mittels Saugluft, also Unterdruck, an den Halteorganen fixieren. Die Halteorgane erstrecken sich etwa über die gesamte Höhe des Zuschnittstapels 10, mindestens aber bis zur unteren Auflageebene der Zuschnittstapel.

Bei dem gezeigten Ausführungsbeispiel ist der Aufnahmekopf 29 mit zwei über Eck angeordneten, also in einem rechten Winkel zueinander stehenden, aufrechten Haltebacken 30, 31 ausgerüstet. Diese werden so eingesetzt, daß sie jeweils an zwei aneinanderschließenden aufrechten Flächen des Zuschnittstapels 10 zur Anlage kommen. Bei dem vorliegenden Ausführungsbeispiel sind die Zuschnittstapel 10 auf der Palette 19 so positioniert, daß die Reihen 20 mit der trapezförmigen Endfläche 14 dem Depalettierer 25 zugekehrt sind. Eine erste Haltebacke 30 kommt deshalb an der freien Seite des Zuschnittstapels 10, also an der Endfläche 14, zur Anlage. Die andere Haltebacke 31 ist einer zweiten freien Fläche des Zuschnittstapels 10 zugeordnet, nämlich der Seitenfläche 11.

Die Haltebacken 30, 31 werden bis zur Anlage an den zugeordneten Flächen des Zuschnittstapels 10 bewegt. Sodann werden die an dem Zuschnittstapel 10 anliegenden Bereiche der Haltebacken 30, 31 oder Teilbereiche derselben mit Unterdruck beaufschlagt, wodurch die Zuschnittstapel 10 an den Haltebacken 30, 31 fixiert sind. Der Aufnahmekopf 29 kann nun unter Mitnahme des Zuschnittstapels 10 angehoben und zum Abförderer 24 bewegt werden.

Die der Endfläche 14 zugekehrte Haltebacke 30 ist entsprechend der Kontur des Zuschnittstapels 10 im Querschnitt trapezförmig ausgebildet. Eine mittige Haltefläche 32 erhält Anlage an dem durch die Querkanten 18 der Zuschnitte gebildeten Bereich der Endfläche 14. Schrägflächen 33 liegen an den durch die Schrägkanten 17 gebildeten entsprechenden seitlichen Bereichen der Endfläche 14 an. Die Haltebacke 30 liegt deshalb formschlüssig und justierend an der Endfläche 14 an.

Lediglich ein Teilbereich der dem Zuschnittstapel 10 zugekehrten Fläche der Haltebacke 30 ist zur Erzeugung der Haltekraft mittels Unterdruck eingerichtet, nämlich die mittlere Haltefläche 32. Hier münden Saugöffnungen 34, die mit einem Saugkanal 35 verbunden sind. Letzterer wiederum schließt an eine Saugleitung 36 an. Der Saugbereich ist durch in die Fläche der Haltebacke 30 eingelassene Dichtungsprofile 37 nach außen abgedichtet (bei Anlage am Zuschnittstapel 10). Die elastischen Dichtungsprofile 37 begrenzen einen Unterdruckbereich der Haltebacke 30. Die Dichtungsprofile 37 ragen zweckmäßigerweise geringfügig über die Ebene der Haltebacke 30 hinaus.

Die der Seitenfläche 11 zugeordnete Haltebacke 31 ist mit einer ebenen Anlagefläche 38 versehen. Diese liegt zur Aufnahme eines Zuschnittstapels 10 an der Seitenfläche 11 an.

Ein Teilbereich der Anlagefläche 38 ist als Saugfläche 39 ausgebildet. Im Bereich derselben sind freie Saugöffnungen gebildet, im vorliegenden Falle mehrere Saugschlitze 40. Diese sind an eine gemeinsame Unterdruckleitung 41 angeschlossen. Die Saugfläche 39, also der Bereich der Saugschlitze 40, ist ringsherum bzw. seitlich und oben von einem Dichtungsprofil 42 umgeben, so daß eine Wirkung entsteht, wie sie im Zusammenhang mit der Haltebacke 30 beschrieben ist. Die Saugfläche 39 erstreckt sich bis an den unteren Rand der Haltebacke 31, so daß der Zuschnittstapel 10 bis zum unteren Zuschnitt durch die Saugkraft gehalten ist. Die Höhe der Saugfläche 39 kann geringer sein als die Höhe des Zuschnittstapels 10.

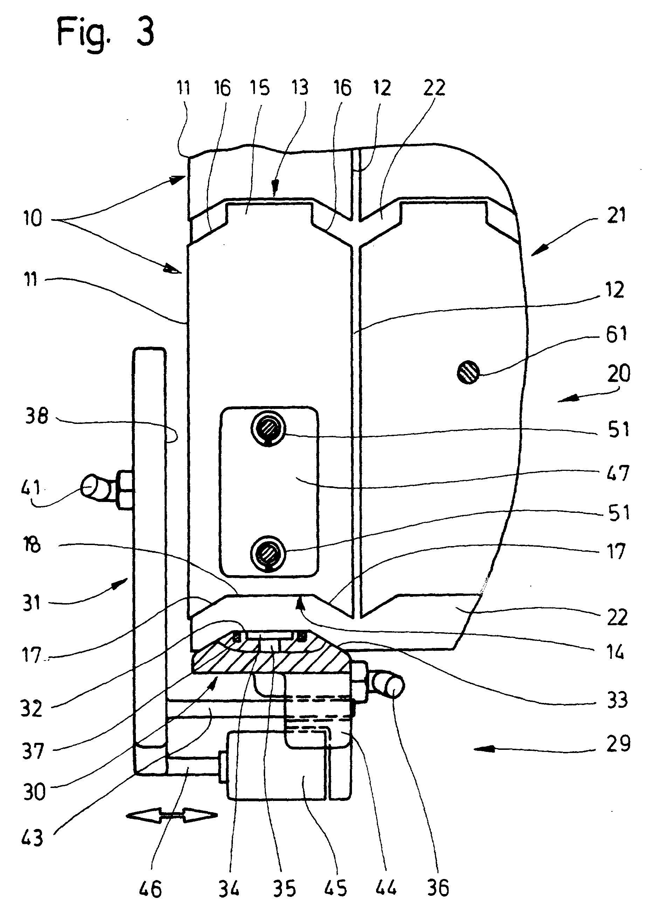

Zur Aufnahme eines Zuschnittstapels 10 wird der Aufnahmekopf 29 durch den Depalettierer 25 bis zur Auflage der Haltebacken 30, 31 auf einer unteren Fläche abgesenkt. Bei dieser handelt es sich im vorliegenden Fall um einen freiliegenden Bereich einer Zwischenlage 22. Alternativ können die Haltebacken 30, 31 auf die freie Oberseite einer unteren Lage 21 aus Zuschnittstapeln 10 aufgesetzt werden. Bei der Aufnahme eines ersten am Rand bzw. an der Ecke einer Lage 21 positionierten Zuschnittstapels 10 (Beispiel gemäß Fig. 3) wird lediglich die Haltebacke 30 auf einen vorstehenden Randbereich der Zwischenlage 22 zur Definition der Höhenstellung des Aufnahmekopfes 29 aufgesetzt. Die andere Haltebacke 31 ist damit automatisch hinsichtlich der Höhenstellung justiert.

Beide Haltebacken 30, 31 sind bei dieser unteren Ausgangsstellung mit Abstand von dem aufzunehmenden Zuschnittstapel 10 angeordnet. Die Haltebacke 30 wird nun gegen die zugeordnete Endfläche 14 des Zuschnittstapels 10 gefahren, und zwar durch entsprechende Bewegung des gesamten Aufnahmekopfes 29 in horizontaler Ebene. Durch die Anlage der profilierten Haltebacke 30 an der Endfläche 14 wird der Zuschnittstapel 10 ausgerichtet. Nun wird durch quergerichtete Bewegung die Haltebacke 31 gegen die Seitenfläche 11 des Zuschnittstapels 10 bewegt.

Die Haltebacke 31 ist zu diesem Zweck horizontal verstellbar am Aufnahmekopf 29 gelagert. Im vorliegenden Falle sind an einem freien Ende außerhalb des Bereichs des Zuschnittstapels 10 zwei quergerichtete Führungsstangen 43 an der Haltebacke 31 angeordnet. Diese sind in Bohrungen eines Lagerstücks 44 an der freien Rückseite der Haltebacke 30 verschiebbar gelagert. Zur Durchführung der Querbewegungen der Haltebacke 31 dient ein pneumatischer Zylinder 45, der über eine Tragvorrichtung ebenfalls mit der Rückseite der Haltebacke 30 verbunden ist. Eine Kolbenstange 46 des Zylinders 45 ist mit einem Ansatz an der Haltebacke 31 verbunden.

Nach Anlage beider Haltebacken 30, 31 an den zugeordneten Flächen des Zuschnittstapels 10 wird Unterdruck auf die vorgesehenen Flächenbereiche übertragen. Der Zuschnittstapel 10 ist nunmehr am Aufnahmekopf 29 fixiert und kann von der Unterlage abgehoben werden.

Um ein sicheres Erfassen aller unteren Zuschnitte des Zuschnittstapels 10 zu gewährleisten, ist am Aufnahmekopf 29 ein Druckorgan angebracht, durch das während des Aufnahmevorgangs eines Zuschnittstapels 10, nämlich bis zum Abheben desselben von der Zwischenlage 22, von oben Druck ausgeübt wird. Es handelt sich dabei im vorliegenden Fall um eine federnd gelagerte Druckplatte 47. Diese ist an einer drehgesicherten Kolbenstange 48 eines pneumatischen Betätigungszylinders 49 angebracht. Dieser wiederum sitzt an der Unterseite einer Tragplatte 50 des Aufnahmekopfes 29. Die Druckplatte 47 ist über Federn 51 elastisch, nämlich in Aufwärtsrichtung gegen elastischen Druck verschiebbar, an einer Halteplatte am unteren Ende der Kolbenstange 48 gelagert. Durch Ausfahren der Kolbenstange 48 nach unten wird die Druckplatte 47 unter Erzeugung eines elastischen Drucks auf den Zuschnittstapel 10 abgesenkt. Die Zuschnitte werden dadurch vor allem im Wirkungsbereich der Haltebacken 30, 31 dicht zusammengedrückt.

An der gemeinsamen Tragplatte 50 ist auch die Haltebacke 30 angebracht, und zwar in Aufwärtsrichtung gegen Druck verschiebbar. Das obere Ende der Haltebacke 30 ist mit einer Tragstange 53 in einen Führungskörper 54 der Tragplatte 50 in Vertikalrichtung verschiebbar gelagert. Eine Druckfeder 55 stützt die Haltebacke 30 elastisch am Führungskörper 54 ab. Die Relativstellung der Haltebacke 30 ist so gewählt, daß beim Aufsetzen auf eine untere Ebene (Zwischenlage 22) der elastische Druck der Druckfeder 55 wirksam wird. Die Tragstange 53 wird dabei relativ zur Tragplatte 50 nach oben verschoben. Eine am oberen Ende der Tragstange 53 angeordnete Schaltfahne 56 betätigt dabei einen Endschalter 57 bzw. einen berührungslosen Sensor auf der Oberseite der Tragplatte 50. Durch diesen Vorgang wird die Abwärtsbewegung des Aufnahmekopfes 29 abgeschaltet. Die Haltebacken 30, 31 haben die untere Endstellung erreicht. Diese ist dadurch gegeben, daß die Haltebacken 30, 31 auf derselben Unterlage abgestützt sind, auf der auch die Zuschnittstapel 10 aufliegen.

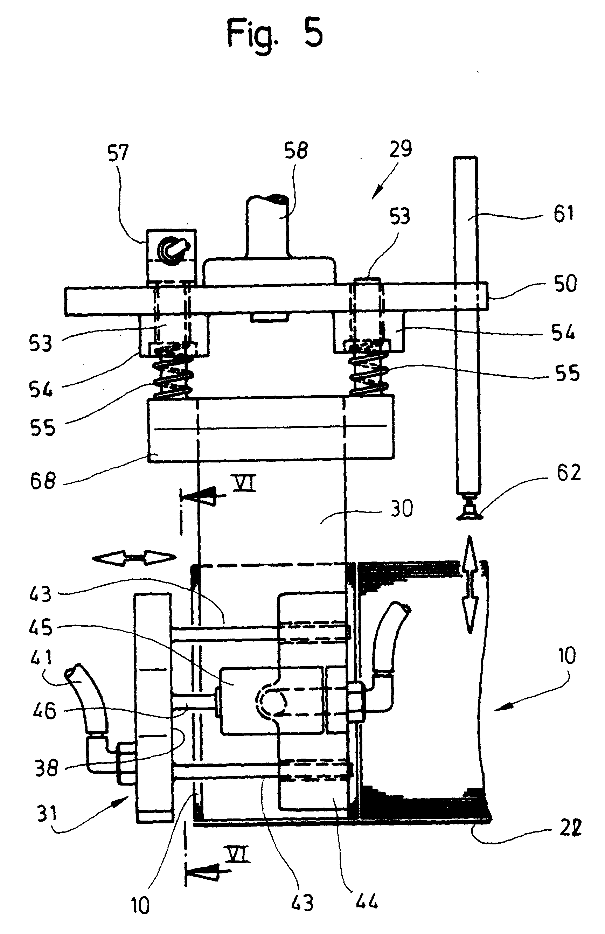

Bei dem vorliegenden Ausführungsbeispiel sind zwei im Abstand voneinander angeordnete Tragstangen 53 zur Lagerung und Halterung der Haltebacke 30 an der Tragplatte 50 vorgesehen (Fig. 5). Die unteren Enden der Tragstangen 53 sind durch eine quergerichtete Traverse 68 miteinander verbunden. An dieser ist die Haltebacke 30 angebracht.

Die beschriebene Handhabung der Zuschnittstapel 10 läuft selbsttätig ab. Die erforderlichen Bewegungen werden - bis auf die Bewegung der Haltebacke 31 - als Bewegungen des Depalettierers 25 bzw. des Roboters über dessen zentrale Steuereinheit bewirkt. Die Tragplatte 50 ist über einen aufrechten stangenförmigen Träger 58 mit dem Ende des Gelenkarms 28 verbunden. Der Träger 58 ist um eine vertikale Achse drehbar - gesteuert vom Depalettierer 25.

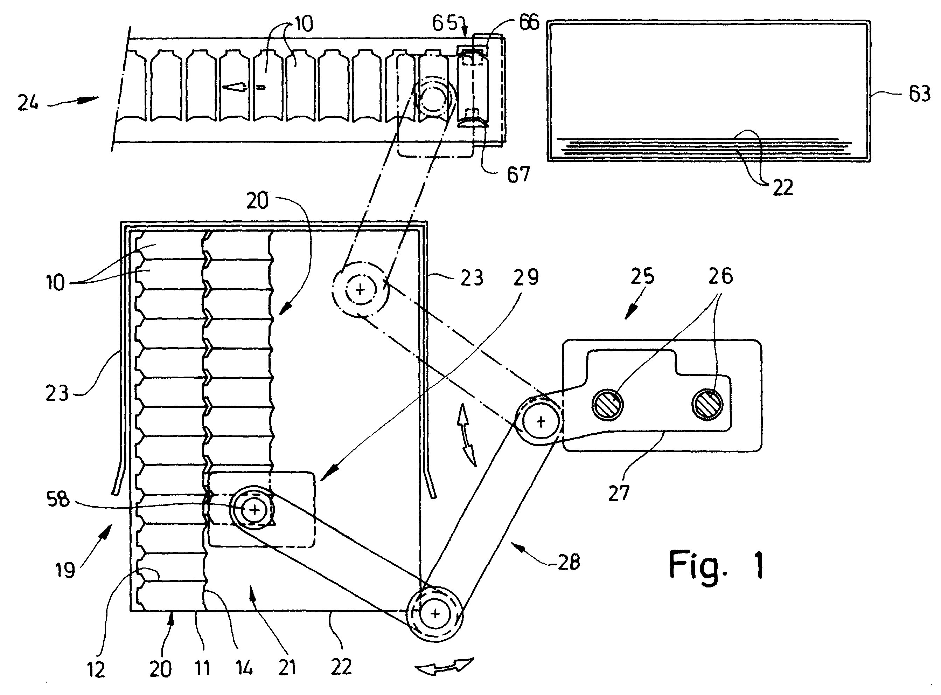

An der Tragplatte 50 ist ein Sensor 59 angebracht, der die wichtigsten Bewegungen des Aufnahmekopfes 29 steuert. Der Sensor 59 kann als optoelektronischer oder mit Laser arbeitender Sensor ausgebildet sein. Nach Zustellung einer neuen, gefüllten Palette 19 zur Entleerungsstation gemäß Fig. 1 werden zunächst die wichtigen Daten der Palette 19 abgetastet. Zu diesem Zweck wird der Aufnahmekopf 29 bzw. die Tragplatte 50 mit einem bestimmten, vorgegebenen Abstand oberhalb der oberen Lage 21 bewegt. Dabei werden die Konturen der Palette 19 bzw. der Beladung abgetastet. Der Sensor 59 kann die Höhe der Beladung feststellen, also die Anzahl der Lagen 21 übereinander. Bei unvollständigen Lagen 21 oder unvollständigen Reihen 20 kann der Sensor 59 auch diese Kontur der Oberseite erkennen. Die festgestellten Daten werden in einem zentralen Rechner zur Steuerung des Depalettierers 25 gespeichert.

Der Sensor 59 steuert sodann die Bewegung des Aufnahmekopfes 29 in horizontaler Ebene derart, daß der Aufnahmekopf 29 in eine Stellung oberhalb des zuerst aufzunehmenden Zuschnittstapels 10 gefahren wird. Dabei kommt der an einer freien Ecke der oberen Lage 21 positionierte Zuschnittstapel 10 in Betracht, bei dem aufgrund der Relativstellung die Seitenfläche 11 und Endfläche 14 freiliegen.

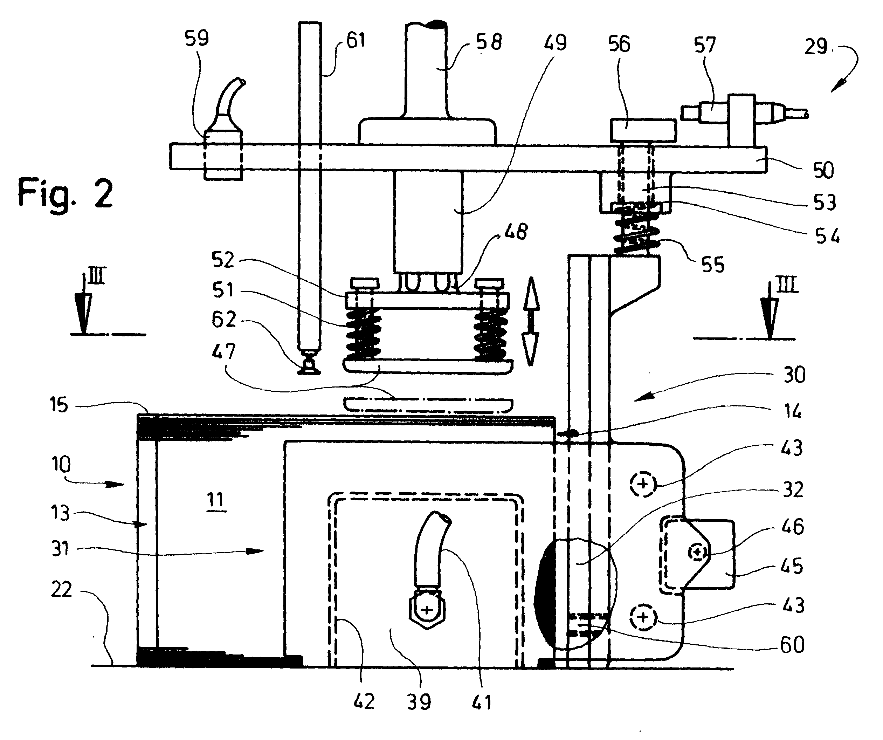

Bei Erreichen der Ausgangsposition oberhalb des Zuschnittstapels 10 wird der Aufnahmekopf 29 abgesenkt in die Position gemäß Fig. 2 bzw. Fig. 3. Die Absenkbewegung wird durch Zusammenwirken von Schaltfahne 56 und Endschalter 57 beendet. Danach wird der gesamte Aufnahmekopf 29 in horizontaler Richtung gegen den Zuschnittstapel 10 bewegt. Diese Horizontalbewegung wird über einen weiteren Sensor 60 gesteuert, der im unteren Bereich der Haltebacke 30 in einer horizontalen Bohrung derselben angeordnet ist. Der Sensor 60 beendet die horizontale Bewegung des Aufnahmekopfes 29 bzw. der Haltebacke 30, wenn diese an der Endfläche 14 Anlage erhalten hat.

Als nächstes wird der Zylinder 45 betätigt, derart, daß die Haltebacke 31 bis zur Anlage an der Seitenfläche 11 bewegt wird. Beide Haltebacken 30 und 31 werden nun mit einer Unterdruckquelle verbunden, so daß Saugkraft auf die Flächen des Zuschnittstapels 10 übertragen wird.

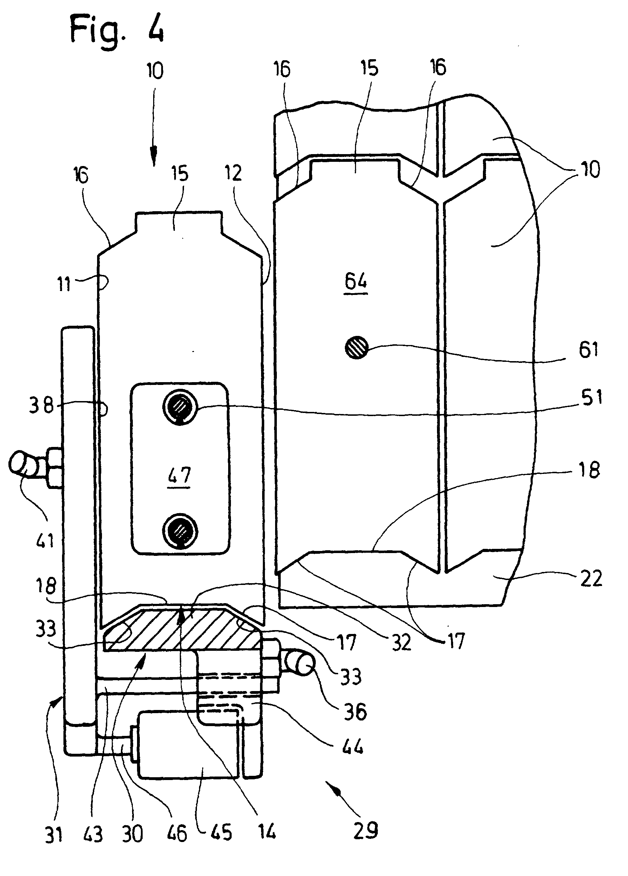

Nach dem Erfassen eines Zuschnittstapels 10 wird der Aufnahmekopf 29 mit dem Zuschnittstapel 10 zunächst angehoben und sodann in eine seitliche Zwischenstellung gemäß Fig. 4 gefahren. Der erfaßte Zuschnittstapel 10 liegt nun neben der ursprünglichen Position desselben, versetzt zur freien Seite. In dieser Stellung kann ein vorsorglich installiertes Organ zum Aufnehmen eines unteren Zuschnitts 64 wirksam werden. Es handelt sich dabei um einen Heber 61 für einzelne, auf der Zwischenlage 22 liegengebliebene untere Zuschnitte 64, die durch die Haltebacken 30, 31 nicht erfaßt worden sind. Der Heber 61 ist als langgestrecktes, aufrechtes Organ ausgebildet und seitlich - mit Abstand von den Haltebacken 30, 31 - an der Tragplatte 50 angebracht. Am unteren Ende des Hebers 61 ist ein Sauger 62 angebracht, der den liegengebliebenen Zuschnitt 64 etwa mittig erfaßt und mit anhebt, so daß der Zuschnittstapel 10 restlos entfernt ist.

Der einzelne Zuschnitt kann separat entsorgt werden oder mit auf dem Abförderer 24 - zusammen mit dem Zuschnittstapel 10 - abgelegt werden. Bei dem vorliegenden Ausführungsbeispiel ist am Beschickungsende des Abförderers 24 eine Sammelaufnahme 65 für die einzelnen Zuschnitte 64 vorgesehen. Die Sammelaufnahme 65 ist ortsfest positioniert, und zwar in einem Abstand von dem benachbarten Zuschnittstapel 10, der dem Abstand dieses Zuschnittstapels zwischen den Haltebacken 30, 31 von dem Heber 61 entspricht. Wenn demnach ein Zuschnittstapel 10 auf dem Abförderer 24 abgesetzt wird, befindet sich ein eventuell vom Heber 61 mitgeführter Zuschnitt 64 oberhalb der Sammelaufnahme 65, kann hier demnach gleichzeitig mit dem Zuschnittstapel 10 abgesetzt werden. Die einzelnen Zuschnitte 64 werden in der Sammelaufnahme 65 solange gesammelt, bis ein kompletter, für den Abtransport durch den Abförderer 24 geeigneter Zuschnittstapel erreicht ist. Die Sammelaufnahme 65 ist an gegenüberliegenden Seiten mit Haltestücken 66 und 67 versehen, die in den Konturen den zugekehrten Flächen, nämlich der Kopffläche 13 und der Endfläche 14, der Zuschnittstapel 10 entspricht. Die Zuschnitte 64 werden dadurch formschlüssig in der Sammelaufnahme 65 gehalten.

Der Heber 61 bzw. dessen Sauger 62 ist an eine gesonderte Unterdruckleitung angeschlossen und separat steuerbar. Der Unterdruck des Saugers 64 ist dabei so bemessen, daß lediglich ein einzelner Zuschnitt aufgenommen werden kann. Der Aufnahmekopf 29 ist so gesteuert, daß bei dem Arbeitstakt, also nach jeder Aufnahme eines Zuschnittstapels 10 von der Palette 19, eine Zwischenstellung gemäß Fig. 4 eingenommen wird, also neben der vorherigen Position des aufgenommenen Zuschnittstapels 10. Der Aufnahmekopf 29 wird dabei geringfügig abgesenkt, so daß der Heber 61 einen eventuell zurückgebliebenen Zuschnitt 64 erfassen kann. Liegt dort kein Zuschnitt 64, kommt der Sauger 62 an der Zwischenlage 22 zur Anlage. Die Saugkraft ist aber nicht ausreichend, um diese Zwischenlage anzuheben.

Die Zustellung des Aufnahmekopfes 29 zu den einzelnen weiteren Zuschnittstapeln 10 erfolgt vorzugsweise aufgrund des abgetasteten und gespeicherten Bewegungsprogramms des Aufnahmekopfes 29. Alternativ ist aber auch möglich, daß der Sensor 57 jedes Mal erneut bei der Aufnahme eines Zuschnittstapels 10 wirksam wird, also jeden Zuschnittstapel 10 hinsichtlich seiner Position abtastet, bevor der Aufnahmekopf 29 in die Aufnahmeposition für den Zuschnittstapel abgesenkt wird. Eine weitere Alternative besteht darin, daß die Lage der Zuschnittstapel 10 reihenweise abgetastet und die Position der Zuschnittstapel 10 innerhalb der einzelnen Reihen 20 als Bewegungsprogramm des Aufnahmekopfes 29 gespeichert wird.

## Patentansprüche

1. Vorrichtung zum Aufnehmen und Abtransportieren von Stapeln aus übereinander angeordneten Zuschnitten - Zuschnittstapeln (10) -, insbesondere für die Fertigung von Klappschachteln, sog. Hinge-Lid-Packungen, für Zigaretten, wobei mehrere Zuschnittstapel (10) in Reihen (20) nebeneinander auf einer Unterlage positioniert und vorzugsweise aus mehreren Reihen (20) gebildete Lagen (21) übereinander angeordnet sind, vorzugsweise auf einer Palette (19), und wobei weiterhin zur Aufnahme von vorzugsweise einzelnen Zuschnittstapeln (10) ein an einem schwenkbaren Arm angeordneter Aufnahmekopf (29) den Zuschnittstapel (10) erfaßt und auf einem Abförderer (24) absetzt, **dadurch gekennzeichnet, daß** der Aufnahmekopf (29) zwei Haltebacken (30, 31) aufweist, die an freien, aneinandergrenzenden, seitlichen, aufrechten Flächen des Zuschnittstapels (10) Anlage erhalten und diesen ausschließlich durch Saugwirkung erfassen und zusammen halten.

2. Vorrichtung nach Anspruch **1**, **dadurch gekennzeichnet, daß** eine erste Haltebacke (30) des Aufnahmekopfes (29) an einer durch eine trapezförmige Vertiefung schwalbenschwanzartig konturierten, schmalen Endfläche (14) des Zuschnittstapels (10) formschlüssig anliegt und daß die zweite Haltebacke (31) an einer seitlichen Fläche, nämlich an einer Seitenfläche (11) des Zuschnittstapels (10) anliegt.

3. Vorrichtung nach Anspruch 1 oder 2, **dadurch gekennzeichnet, daß** lediglich Teilbereiche der einen und/oder anderen Haltebacke (30, 31) mit Saugluft beaufschlagt sind, nämlich im Bereich von Halteflächen (32) bzw. Saugflächen (39), wobei die Haltebacken (30 oder 31) im Bereich der Halteflächen (32) bzw. Saugflächen (39) mit Saugöffnungen versehen sind und der Bereich der Halteflächen (32) bzw. Saugflächen (39) ringsherum durch ein Dichtungsprofil (37, 42) gegenüber dem nicht unter Saugwirkung stehenden Bereich der Haltebacken (30, 31) abgegrenzt bzw. abgedichtet sind.

4. Vorrichtung nach Anspruch 3, **dadurch gekennzeichnet, daß** sich die Haltefläche (32) bzw. Saugfläche (39) der Haltebacken (30, 31) jeweils bis zum unteren Rand derselben erstreckt.

5. Vorrichtung nach Anspruch 1 oder einem der weiteren Ansprüche, **dadurch gekennzeichnet, daß** die Haltebacken (30, 31) quer zu den zugeordneten Flächen des Zuschnittstapels (10) bewegbar sind, insbesondere derart, daß bei Aufnahme eines Zuschnittstapels (10) zuerst die im Querschnitt trapezförmige Haltebacke (30) der schwalbenschwanzartig ausgebildeten Endfläche (14) und sodann die zweite Haltebacke (31) der Seitenfläche (11) bis zur Anlage am Zuschnittstapel (10) zustellbar sind.

6. Vorrichtung nach Anspruch 5 oder einem der weiteren Ansprüche, **dadurch gekennzeichnet, daß** die zweite Haltebacke (31) verschiebbar an der ersten Haltebacke (30) gelagert ist.

7. Vorrichtung nach Anspruch 1 oder einem der weiteren Ansprüche, **dadurch gekennzeichnet, daß** der Aufnahmekopf (29) mit den unter einem rechten Winkel zueinander positionierten Haltebacken (30, 31) durch Abwärtsbewegung in eine Position benachbart zu den zugekehrten Flächen des Zuschnittstapels (10) absenkbar ist, wobei in der unteren Endstellung mindestens eine Haltebacke, insbesondere die Haltebacke (30), auf einer Unterlage ruht, beispielsweise auf einer Zwischenlage (22) zwischen übereinander angeordneten Lagen (21).

8. Vorrichtung nach Anspruch 1 oder einem der weiteren Ansprüche, **dadurch gekennzeichnet, daß** lediglich eine der Haltebacken, insbesondere die Haltebacke (30), unmittelbar mit einem Traggestell des Aufnahmekopfes (29) verbunden ist, vorzugsweise mit einer Tragplatte (50), wobei vorzugsweise die Haltebacke (30) relativ zur Tragplatte (50) gegen Federbelastung auf- und abbewegbar ist.

9. Vorrichtung nach Anspruch 1 oder einem der weiteren Ansprüche, **dadurch gekennzeichnet, daß** für die Aufnahme eines Zuschnittstapels (10) durch die Haltebacken (30, 31) ein Druckorgan auf die Oberseite des betreffenden Zuschnittstapels (10) absenkbar ist, vorzugsweise eine mit dem Aufnahmekopf (29) bzw. mit dessen Tragplatte (50) verbundene, auf- und abbewegbare Druckplatte (47).

10. Vorrichtung nach Anspruch 1 oder einem der weiteren Ansprüche, **dadurch gekennzeichnet, daß** der Aufnahmekopf (29) ausschließlich durch einen Gelenkarm (28) des Depalettierers (25) bewegbar ist, wobei dessen Steuereinheit durch einen am Aufnahmekopf (29), insbesondere an der Tragplatte (50) angebrachten Sensor (59) steuerbar ist, der abstandslos die Beladung der Palette (19) abtastet und die erforderlichen Daten zur Aufnahme der einzelnen Zuschnittstapel (10) speichert.

11. Vorrichtung nach Anspruch 1 oder einem der weiteren Ansprüche, **dadurch gekennzeichnet, daß** der Aufnahmekopf (29) ein gesondertes Organ zum Erfassen und Aufnehmen einzelner Zuschnitte von einer Unterlage, insbesondere Zwischenlage (22), aufweist, vorzugsweise einen Heber (61) mit am unteren Ende angeordneten Sauger (62), wobei ein nach dem Abheben eines Zuschnittstapels (10) durch den Aufnahmekopf (29) etwa auf der Zwischenlage (22) zurückgebliebener unterer Zuschnitt durch den Heber (61) in einem zusätzlichen Bewegungstakt des Aufnahmekopfes (29) aufnehmbar ist.

## Claims

1. Apparatus for receiving and transporting away stacks of blanks arranged one above the other - blank stacks (10) - in particular for producing hinge-lid boxes, or hinge-lid packs, for cigarettes, it being the case that a plurality of blank stacks (10) are positioned in rows (20) one beside the other on an underlying surface and layers (21) preferably formed from a plurality of rows (20) are arranged one above the other, preferably on a pallet (19), and it also being the case that, for the purpose of receiving preferably individual blank stacks (10), a receiving head (29) arranged on a pivotable arm grips the blank stack (10) and sets it down on a removal conveyor (24), **characterized in that** the receiving head (29) has two retaining jaws (30, 31) which butt against free, adjacent, lateral, upright surfaces of the blank stack (10) and grip the latter, and hold it together, exclusively by suction action.

2. Apparatus according to Claim 1, **characterized in that** a first retaining jaw (30) of the receiving head (29) butts in a form-fitting manner against a narrow end surface (14) of the blank stack (10) which is contoured in a dovetail-like manner by a trapezoidal depression, and **in that** the second retaining jaw (31) butts against a lateral surface, namely against a lateral surface (11) of the blank stack (10).

3. Apparatus according to Claim 1 or 2, **characterized in that** merely sub-regions of one retaining jaw (30, 31) and/or the other are subjected to the action of suction air, namely in the region of retaining surfaces (32) or suction surfaces (39), respectively, it being the case that the retaining jaws (30 or 31) are provided with suction openings in the region of the retaining surfaces (32) or suction surfaces (39), respectively, and the region of the retaining surfaces (32) or suction surfaces (39) are separated off and/or sealed all the way round by a sealing profile (37, 42) in relation to that region of the respective retaining jaws (30, 31) which is not subjected to suction action.

4. Apparatus according to Claim 3, **characterized in that** the retaining surface (32) or suction surface (39) of the respective retaining jaws (30, 31) extends in each case as far as the bottom border of the same.

5. Apparatus according to Claim 1 or one of the further claims, **characterized in that** the retaining jaws (30, 31) can be moved transversely to the associated surfaces of the blank stack (10), in particular such that, when a blank stack (10) is received, it is possible first of all for the cross-sectionally trapezoidal retaining jaw (30) to be advanced towards the dovetail-end surface (14), and then for the second retaining jaw (31) to be advanced towards the side surface (11), until they butt against the blank stack (10).

6. Apparatus according to Claim 5 or one of the further claims, **characterized in that** the second retaining jaw (31) is mounted displaceably on the first retaining jaw (30).

7. Apparatus according to Claim 1 or one of the further claims, **characterized in that** the receiving head (29) with the retaining jaws (30, 31), which are positioned at right angles to one another, can be lowered, by movement in the downward direction, into a position adjacent to the facing surfaces of the blank stack (10), it being the case that, in the bottom end position, at least one retaining jaw, in particular the retaining jaw (30), rests on an underlying surface, for example on an intermediate layer (22) between layers (21) arranged one above the other.

8. Apparatus according to Claim 1 or one of the further claims, **characterized in that** only one of the retaining jaws, in particular the retaining jaw (30), is connected directly to a carrying framework of the receiving head (29), preferably to a carrying panel (50), it being possible preferably for the retaining jaw (30) to be moved up and down, counter to spring loading, relative to the carrying panel (50).

9. Apparatus according to Claim 1 or one of the further claims, **characterized in that**, for the purpose of receiving a blank stack (10) by the retaining jaws (30, 31), a pressure-exerting element can be lowered onto the top side of the relevant blank stack (10), preferably a pressure-exerting plate (47) which can be moved up and down and is connected to the receiving head (29) or to the carrying panel (50) thereof.

10. Apparatus according to Claim 1 or one of the further claims, **characterized in that** the receiving head (29) can be moved exclusively by an articulated arm (28) of the depalletizer (25), it being possible for the control unit thereof to be controlled by a sensor (59) which is fitted on the receiving head (29), in particular on the carrying panel (50), senses the loading of the pallet (19) without any spacing and stores the necessary data for receiving the individual blank stacks (10).

11. Apparatus according to Claim 1 or one of the further claims, **characterized in that** the receiving head (29) has a separate element for gripping and receiving individual blanks from an underlying surface, in particular intermediate layer (22), preferably a lifting element (61) with a sucker (62) arranged at the bottom end, it being possible for a bottom blank which has, for example, been left behind on the intermediate layer (22) once the receiving head (29) has lifted off a blank stack (10) to be received by the lifting element (61) in an additional movement cycle of the receiving head (29).

## Revendications

1. Dispositif de prise et d'évacuation de piles de découpes placées les unes sur les autres (piles de découpes (10)), en particulier pour la fabrication de boîtes à couvercle basculant, dites paquets HLP, pour cigarettes, plusieurs piles de découpes (10) étant positionnées en rangs (20) les unes à côté des autres sur un support et des couches (21) formées de préférence de plusieurs rangs (20) étant placées les unes sur les autres, de préférence sur une palette (19), et en outre, pour la prise de piles de découpes (10) de préférence individuelles, une tête de prise (29) montée sur un bras pivotant saisissant la pile de découpes (10) et la déposant sur un transporteur d'évacuation (29), **caractérisé par le fait que** la tête de prise (29) présente deux mâchoires de maintien (30, 31) qui prennent appui sur des surfaces latérales verticales adjacentes libres de la pile de découpes (10) et saisissent celle-ci et la tiennent assemblée exclusivement par aspiration.

2. Dispositif selon la revendication 1, **caractérisé par le fait qu'**une première mâchoire de maintien (30) de la tête de prise (29) s'appuie avec coopération de forme contre une surface d'extrémité étroite (14), à contour du genre queue d'aronde produit par un creux trapézoïdal, de la pile de découpes (10), et que la deuxième mâchoire de maintien (31) s'appuie contre une surface latérale, à savoir contre une surface latérale (11) de la pile de découpes (10).

3. Dispositif selon l'une des revendications 1 et 2, **caractérisé par le fait que** seules des parties de l'une et/ou l'autre mâchoire de maintien (30, 31) sont touchées par de l'air aspiré, à savoir dans la zone de surfaces de maintien (32) ou de surfaces d'aspiration (39), les mâchoires de maintien (30 ou 31) étant pourvues d'orifices d'aspiration dans la zone des surfaces de maintien (32) ou des surfaces d'aspiration (39), et la zone des surfaces de maintien (32) ou des surfaces d'aspiration (39) étant délimitée ou étanchée tout autour par un profil d'étanchéité (37, 42) vis-à-vis de la zone des mâchoires de maintien (30, 31) non soumise à aspiration.

4. Dispositif selon la revendication 3, **caractérisé par le fait que** la surface de maintien (32) ou la surface d'aspiration (39) des mâchoires de maintien (30, 31) s'étend jusqu'au bord inférieur de celles-ci.

5. Dispositif selon la revendication 1 ou une des autres revendications, **caractérisé par le fait que** les mâchoires de maintien (30, 31) sont mobiles perpendiculairement aux surfaces associées de la pile de découpes (10), en particulier de façon telle qu'à la prise d'une pile de découpes (10), d'abord, la mâchoire de maintien de section trapézoïdale (30) peut être approchée de la surface d'extrémité en forme du genre queue d'aronde (14), et ensuite, la deuxième mâchoire de maintien (31) peut être approchée de la surface latérale (11), chacune jusqu'à ce qu'elle s'appuie contre la pile de découpes (10).

6. Dispositif selon la revendication 5 ou une des autres revendications, **caractérisé par le fait que** la deuxième mâchoire de maintien (31) est montée mobile sur la première mâchoire de maintien (30).

7. Dispositif selon la revendication 1 ou une des autres revendications, **caractérisé par le fait que** la tête de prise (29), avec les mâchoires de maintien (30, 31) placées à angle droit l'une de l'autre, peut être descendue dans une position voisine des surfaces en regard de la pile de découpes (10), et dans la position extrême inférieure, au moins une mâchoire de maintien, en particulier la mâchoire de maintien (30), repose sur un support, par exemple sur une couche intermédiaire (22) située entre des couches (21) placées l'une au-dessus de l'autre.

8. Dispositif selon la revendication 1 ou une des autres revendications, **caractérisé par le fait qu'**une seule des mâchoires de maintien, en particulier la mâchoire de maintien (30), est jointe directement à un bâti support de la tête de prise (29), de préférence à une plaque support (50), de préférence la mâchoire de maintien. (30) pouvant monter et descendre par rapport à la plaque support (50) contre la charge d'un ressort.

9. Dispositif selon la revendication 1 ou une des autres revendications, **caractérisé par le fait que** pour la prise d'une pile de découpes (10) par les mâchoires de maintien (30, 31), un organe presseur, de préférence une plaque presseuse (47) jointe à la tête de prise (29) ou à sa plaque support (50) et pouvant monter et descendre, est descendu sur le dessus de la pile de découpes (10) considérée.

10. Dispositif selon la revendicatian 1 ou une des autres revendications, **caractérisé par le fait que** la tête de prise (29) peut être mue exclusivement par un bras articulé (28) du dépalettiseur (25), l'organe de commande de ce dernier pouvant être commandé par un capteur (59) qui est monté sur la tête de prise (29), en particulier sur la plaque support (50), palpe sans distance le chargement de la palette (19) et mémorise les données nécessaires pour la prise des piles de découpes (10) individuelles.

11. Dispositif selon la revendication 1 ou une des autres revendications, **caractérisé par le fait que** la tête de prise (29) présente un organe séparé pour la saisie et la tenue de découpes individuelles depuis un support, en particulier une couche intermédiaire (22), de préférence un élévateur (61) avec ventouse (62) placée à l'extrémité inférieure, une découpe inférieure restant éventuellement sur la couche intermédiaire (22) après l'enlèvement d'une pile de découpes (10) par la tête de prise (29) pouvant être prise par l'élévateur (61) dans un temps supplémentaire de mouvement de la tête de prise (29).
